# EUROPÄISCHE PATENTSCHRIFT

(11) **EP 2 365 597 B1**
(45) Veröffentlichungstag und Bekanntmachung des Hinweises auf die Patenterteilung: **06.01.2016**
(21) Anmeldenummer: 11157481.0
(22) Anmeldetag: 09.03.2011
(51) Int. Cl.: H02G 3/20, H02G 3/32, F16B 21/08, F16L 3/13, F16L 3/10

(54) **Drahthalter für eine Leuchte**
Wire holder for a light
Support de fil d'acier pour une lampe

(30) Priorität: 10.03.2010 DE 202010003420 U
(43) Veröffentlichungstag der Anmeldung: 14.09.2011
(73) Patentinhaber: Zumtobel Lighting GmbH, 6850 Dornbirn (AT)
(72) Erfinder: Zipper, Rene, 6844, Altach (AT); Spiegel, Karl, 6850, Dornbirn (AT)
(74) Vertreter: Thun, Clemens

(56) Entgegenhaltungen:
- EP-A1- 1 521 024
- EP-A1- 1 548 350
- EP-A2- 1 445 845
- WO-A1-2007/061131
- JP-A- 2006 242 269
- US-A1- 2004 159 454

## Beschreibung

Die Erfindung betrifft einen Drahthalter zur Halterung von mindestens einem elektrischen Draht einer Leuchte.

Eine elektrische Leuchte weist zur Stromversorgung ihrer Lichtquelle elektrische Drähte auf. Es ist bekannt, diese Drähte mithilfe von Drahthaltem an bzw. in der Leuchte in einer bestimmten, gewünschten Position zu halten. Die Drahthalter sind dabei an einem weiteren Leuchtenbauteil, beispielsweise an einer Leuchtenwanne oder an einer Montageplatte fixiert. Im Folgenden wird dieses weitere Leuchtenbauteil der Einfachheit halber auch "Trägerbauteil" genannt, um zum Ausdruck zu bringen, dass es den Drahthalter "trägt". Selbstverständlich kann das "Trägerbauteil" noch weitere Funktionen erfüllen.

Beispielsweise kommen derartige Drahthalter bei länglichen Leuchtmodulen von Lichtbandsystemen zum Einsatz, wobei die Drähte mithilfe der Drahthalter überwiegend in Längsrichtung der Leuchtmodule in bzw. an diesen geführt sind.

Ein solcher Drahthalter ist mit einer Rastverbindung an dem Trägerbauteil fixiert, und zwar dadurch, dass ein Verbindungselement des Drahthalters rastend in eine entsprechende Öffnung des Trägerbauteils eingreift.

Bei der Herstellung eines entsprechenden Leuchtmoduls werden die Drähte üblicherweise mithilfe eines Roboters in die Drahthalter eingebracht. Der Roboter führt dabei die Drähte von einem Drahthalter zum nächsten. Wenn der Roboter im Rahmen dieser Bestückung mit einer Roboterklinge durch einen Drahthalter hindurch fährt, kann es zu hohen Querkräften kommen, die auf den betreffenden Drahthalter einwirken. Daher muss die Fixierung des Drahthalters an dem Trägerbauteil derart stabil sein, dass der Drahthalter entsprechenden Querkräften standhält und insbesondere nicht kippt; auch soll sich der Drahthalter natürlich nicht übermäßig verdrehen. Um dies zu gewährleisten ist ein Drahthalter bekannt, der zwei Verbindungselemente in Form von zwei "Schnappfüßen" aufweist, die jeweils in eine Öffnung des Trägerbauteils eingreifen; auf diese Weise ist die Fixierung des Drahthalters an dem Trägerbauteil entsprechend stabil.

Allerdings ist dadurch, dass der Drahthalter zwei Schnappfüße aufweist, seine Herstellung mit einem vergleichsweise hohen Aufwand verbunden. Außerdem erfordert die Herstellung des Trägerbauteils einen erhöhten Aufwand, weil pro Drahthalter zwei entsprechende Öffnungen in dem Trägerbauteil hergestellt werden müssen. Derartige Öffnungen werden in der Regel durch Ausstanzen gebildet, wobei die entsprechende Stanzzeit oft für den Takt bei der Herstellung des Trägerbauteils bestimmend ist. Insgesamt wird also durch den bekannten stabilen Drahthalter der Aufwand bei der Herstellung einer entsprechenden Leuchte erhöht.

Aus der EP 1 521 024 A1, die den Oberbegriff des Anspruchs 1 bildet, ist eine Kabelklemme zur Befestigung in einer Aufnahmeöffnung eines Bauteils bekannt. Die Kabelklemme weist ein Anlageelement zur Anlage an einen Randbereich der Aufnahmeöffnung auf sowie ein Verbindungselement, das rastend in die Aufnahmeöffnung eingreift. Das Verbindungselement ist dabei so geformt, dass es in der Ebene der Aufnahmeöffnung nicht kreisförmig ist.

Der Erfindung liegt die Aufgabe zugrunde, einen Drahthalter bzw. eine Leuchte anzugeben, der bzw. die bei ausreichender Stabilität des Drahthalters weniger Aufwand bei der Herstellung der Leuchte erfordert.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein Drahthalter zur Halterung von mindestens einem elektrischen Draht einer Leuchte vorgesehen, wobei der Drahthalter weiterhin dafür vorgesehen ist, an einem eine Aufnahmeöffnung aufweisenden Bauteil der Leuchte fixiert zu werden. Der Drahthalter weist ein Anlageelement auf, das dafür vorgesehen ist, von einer Seite an einen Randbereich der Aufnahmeöffnung angelegt zu werden sowie ein Verbindungselement, das dafür vorgesehen ist, zur Fixierung des Drahthalters an dem Bauteil rastend in die Aufnahmeöffnung einzugreifen; das Verbindungselement ist dabei derart ausgebildet, dass es in einem Schnitt längs einer Ebene, in der die Aufnahmeöffnung liegt, wenn der Drahthalter wie vorgesehen an dem Bauteil fixiert ist, nicht kreisförmig ist.

Durch diese Formgebung ist ermöglicht, dass der Drahthalter an dem Bauteil mit lediglich einem Verbindungselement fixiert werden kann und dabei ausreichend gegen eine Verdrehung gesichert und stabilisiert ist. Insbesondere muss der Drahthalter also nicht zwei Schnappfüße aufweisen, so dass die Herstellung des Drahthalters erleichtert ist. Außerdem ist zur Fixierung des Drahthalters in dem Bauteil lediglich eine Aufnahmeöffnung erforderlich, so dass sich auch das Bauteil leichter herstellen lässt. Eine entsprechend große Stabilität des Drahthalters ist insbesondere von Bedeutung, wenn vorgesehen ist, dass zur Herstellung der Leuchte der Draht robotergestützt in den Drahthalter eingebracht wird; allerdings bestehen die Vorteile auch in sonstigen Fällen, also beispielsweise bei manueller Drahteinbringung.

Vorzugsweise ist das Verbindungselement derart ausgebildet, dass es in dem Schnitt eine Rechteckform, beispielsweise eine quadratische Form festlegt. Dies ermöglicht eine vergleichsweise besonders einfache Herstellung.

Erfindungsgemäß weist das Verbindungselement einen Steg mit einem Ursprung an dem Anlageelement auf, wobei sich der Steg von dem Ursprung ausgehend konvergent verjüngt. Eine derartige Formgebung ermöglicht einen besonders stabilen Steg und dabei eine besonders gute Verdrehsicherheit des Drahthalters, wenn er an dem Bauteil fixiert ist. Dabei ist der Steg derart ausgebildet, dass er in einem weiteren Schnitt längs einer weiteren Ebene, die senkrecht zu der Ebene der Aufnahmeöffnung orientiert ist, Y-förmig ist. Hierdurch lässt sich insbesondere der Steg besonders stabil gestalten.

Weiterhin vorzugsweise weist dabei das Verbindungselement wenigstens einen Rastarm auf, der an einem dem Ursprung gegenüber liegenden Endbereich des Stegs angeordnet ist und der dafür vorgesehen ist, zur Fixierung des Drahthalters von einer weiteren, der zuerst genannten Seite gegenüberliegenden Seite rastend gegen einen weiteren Randbereich der Aufnahmeöffnung zu greifen. Dies ermöglicht eine besonders stabile Fixierung des Drahthalters und dabei ein vergleichsweise einfaches Fixieren des Drahthalters an dem Bauteil.

Vorzugsweise weist das Anlageelement eine konkave Fläche auf, wobei der Ursprung des Stegs in einem mittleren Bereich der konkaven Fläche angeordnet ist. Hierdurch wird eine mit einer Federkraft beaufschlagte Fixierung des Drahthalters an dem Bauteil ermöglicht.

Vorzugsweise weist das Anlageelement einen Durchmesser auf, der mindestens doppelt so groß, vorzugsweise mindestens dreimal so groß ist wie der Durchmesser des Verbindungselements. Durch eine entsprechend große Gestaltung des Anlageelements lässt sich eine besonders hohe Sicherheit gegen ein Verdrehen des Drahthalters gegenüber dem Bauteil erzielen. Eine Querkraft, die auf den Drahthalter einwirkt, beispielswiese im Rahmen einer robotergestützten Bestückung des Drahthalters mit dem Draht, kann auf diese Weise von dem Drahthalter besonders gut abgefangen werden.

Vorzugsweise ist das Anlageelement so geformt, dass es die Aufnahmeöffnung ringförmig geschlossen gegenüber dem zuerst genannten Randbereich abdichtend umgibt, wenn der Drahthalter wie vorgesehen an dem Bauteil fixiert ist. Auf diese Weise lässt sich ein Eindringen von Staub oder dergleichen durch die Aufnahmeöffnung hindurch verhindern oder zumindest deutlich reduzieren. Dies ist beispielsweise von Bedeutung, wenn es sich bei dem Bauteil um eine Leuchtenwanne handelt und auf der, dem Draht gegenüberliegenden Seite der Leuchtenwanne elektrische Bauteile angeordnet sind, die vor Staub geschützt werden müssen. Insgesamt trägt dies also dazu bei, dass die Leuchte mit einem höheren Schutzgrad gestaltet werden kann.

Vorzugsweise besteht der Drahthalter aus Kunststoff. Hierdurch weist er eine gewisse Elastizität auf, die vorteilhaft für die Rastverbindung mit dem Bauteil ist.

Gemäß einem weiteren Aspekt der Erfindung ist eine Leuchte vorgesehen, die einen erfindungsgemäßen Drahthalter sowie das die Aufnahmeöffnung aufweisende Bauteil aufweist, wobei der Drahthalter wie vorgesehen an dem Bauteil fixiert ist.

Vorzugsweise weist dabei die Aufnahmeöffnung eine Form auf, die ein Verdrehen des Verbindungselements in der Aufnahmeöffnung verhindert. Beispielsweise kann die Aufnahmeöffnung als Langloch oder Ellipse ausgeführt sein. Bei dem Bauteil kann es sich beispielsweise um ein Leuchtengehäuse, eine Leuchtenwanne oder eine Montageplatte handeln.

Die Erfindung wird im Folgenden anhand eines Ausführungsbeispiels und mit Bezug auf die Zeichnungen näher erläutert. Es zeigen:
- Fig. 1: eine perspektivische Ansicht einer Leuchtenwanne mit einem daran fixierten erfindungsgemäßen Drahthalter,
- Figuren 2 und 3: zwei detailliertere Ansichten des in Fig. 1 gezeigten Drahthalters,
- Fig. 4: ein Ansicht des in Fig. 1 gezeigten Drahthalters von einem Innenbereich der Leuchtenwanne aus gesehen,
- Fig. 5: einen Querschnitt durch den Drahthalter,
- Fig. 6: einen Längsschnitt durch den Drahthalter,
- Fig. 7: einen Teilquerschnitt, der den Steg des Drahthalters zeigt,
- Fig. 8: eine Aufsicht auf den Drahthalter und
- Fig. 9: eine perspektivische Skizze des Drahthalters.

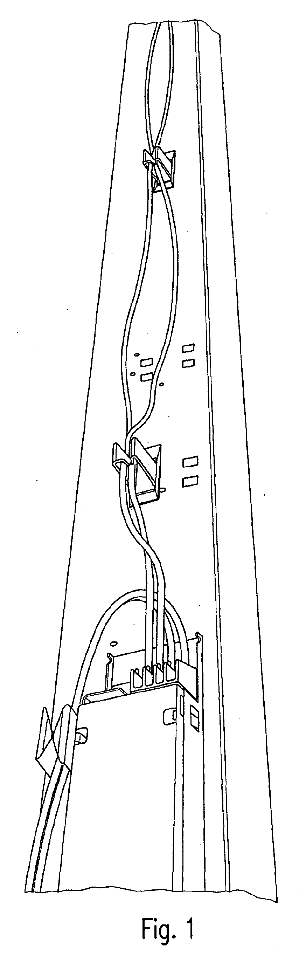

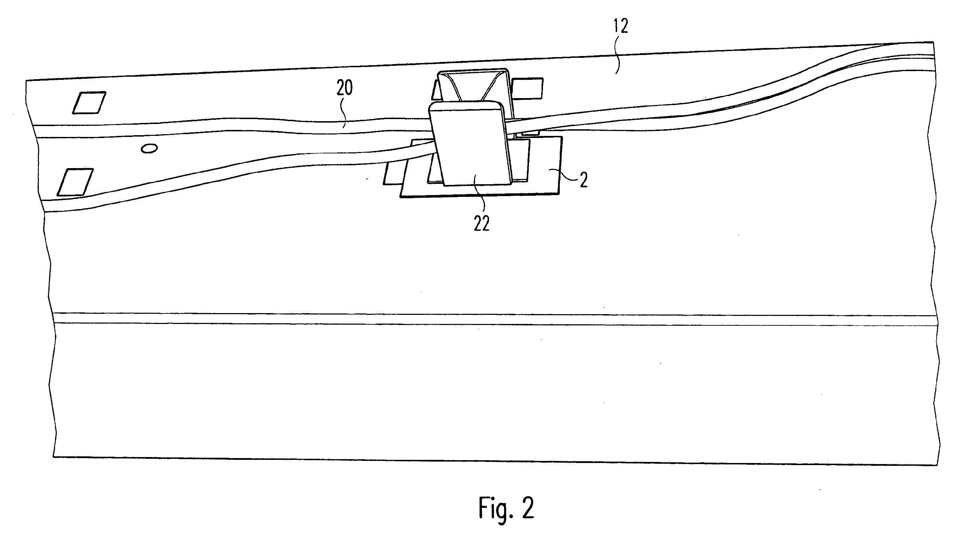

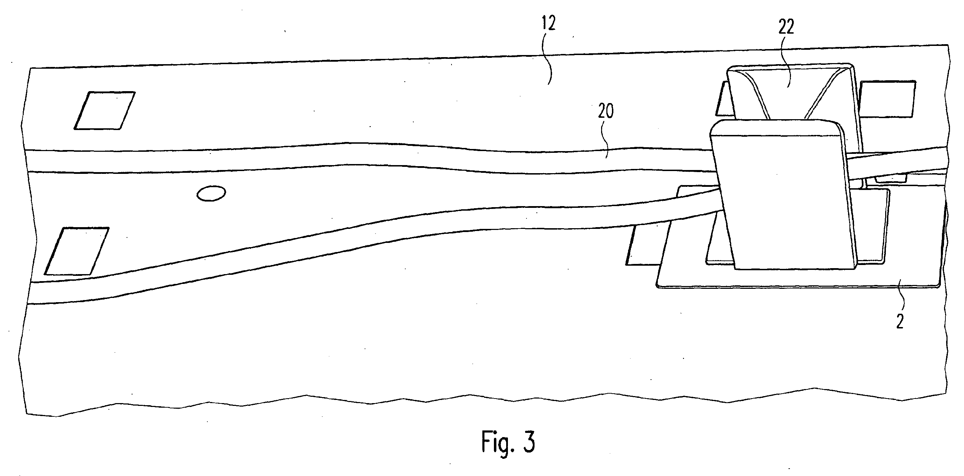

Der in den Figuren gezeigte erfindungsgemäße Drahthalter eignet sich zur Halterung von mindestens einem, beispielhaft in Fig. 2 bezeichneten Draht 20 einer Leuchte. Der Drahthalter ist dafür vorgesehen, an einem "Trägerbauteil", im Folgenden auch kurz Bauteil 12 der Leuchte fixiert zu werden. Bei dem Bauteil 12 kann es sich insbesondere, wie in den Figuren 1 bis 4 gezeigt, um eine Leuchtenwanne handeln. Es kann sich aber auch um ein anderes Bauteil handeln, beispielsweise um ein Leuchtengehäuse oder um eine Montageplatte.

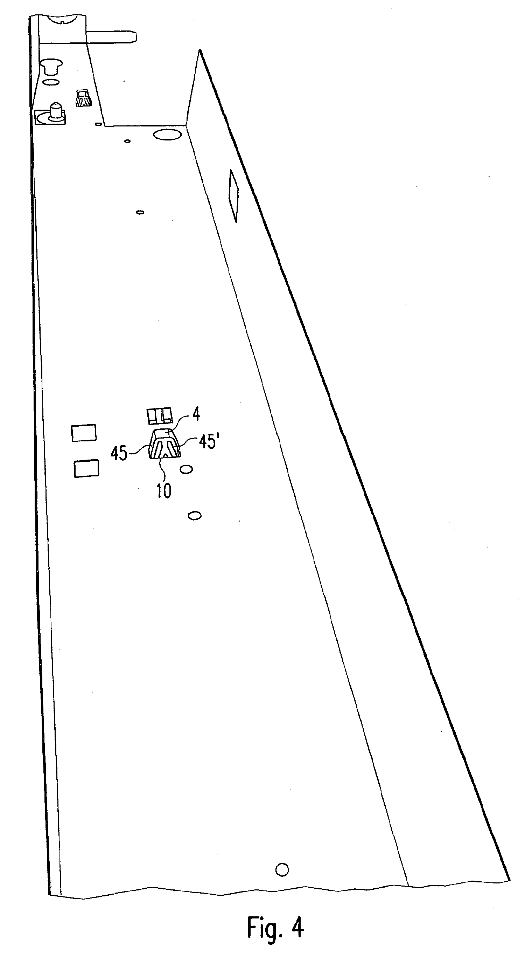

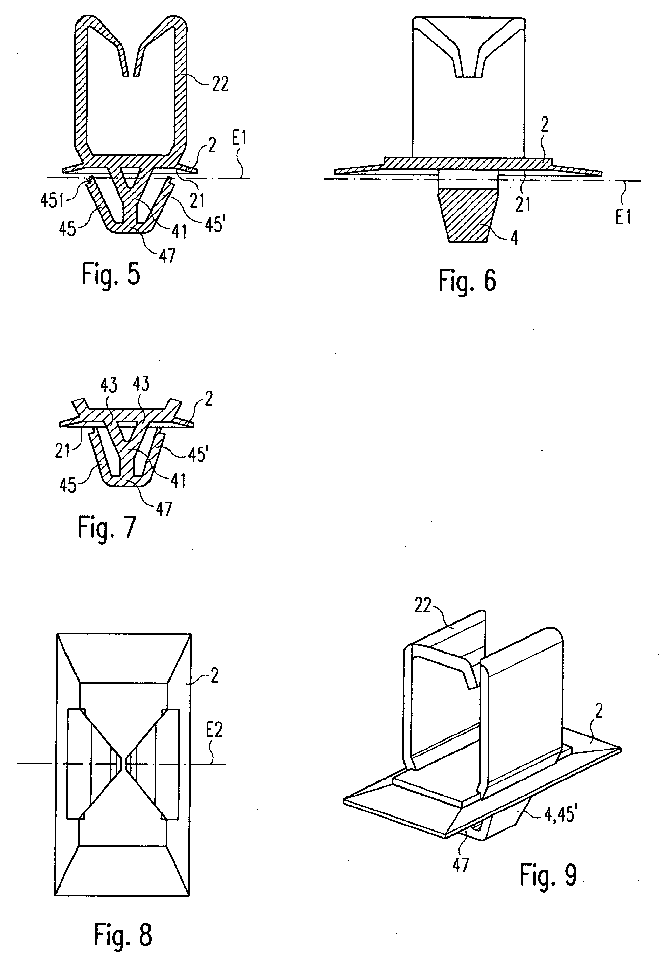

Das Bauteil 12 weist dabei eine, beispielhaft in Fig. 4 bezeichnete, Aufnahmeöffnung 10 auf, die zur Fixierung des Drahthalters vorgesehen ist bzw. dient. In Fig. 9 ist eine perspektivische Skizze des Drahthalters in separierter Form gezeigt.

Der Drahthalter weist ein Anlageelement 2 auf, das dafür vorgesehen ist, von einer Seite an einen Randbereich der Aufnahmeöffnung 10 angelegt zu werden. Im gezeigten Beispiel sind durch die Leuchtenwanne ein Innenbereich und ein Außenbereich gebildet; die Figuren 1 bis 3 zeigen jeweils Ansichten aus dem Außenbereich der Leuchtenwanne, Fig. 4 eine Ansicht des Innenbereichs. Das Anlageelement 2 ist dabei dafür vorgesehen, von der Außenseite her an einen Randbereich der Aufnahmeöffnung 10 angelegt zu werden, wie in den Figuren 2 bis 3 beispielhaft bezeichnet.

Wie beispielsweise in den Figuren 4 und 9 bezeichnet, weist der Drahthalter ein Verbindungselement 4 auf, das dafür vorgesehen ist, zur Fixierung des Drahthalters an dem Bauteil 12 rastend in die Aufnahmeöffnung 10 einzugreifen.

Selbstverständlich kann der Drahthalter ein Drahthaltemittel 22 aufweisen, das zur Halterung des Drahts 20 dient. Beispielsweise kann das Drahthaltemittel 22 durch zwei Drahthaltearme gebildet sein, wie in den Figuren gezeigt.

Fig. 5 zeigt einen Querschnitt durch den (separierten) Drahthalter. Dabei ist mit E1 eine Ebene bezeichnet, in der die Aufnahmeöffnung 10 liegt, wenn der Drahthalter wie vorgesehen an dem Bauteil 12 fixiert ist. Diese Ebene sei vorliegend auch kurz mit "Ebene der Aufnahmeöffnung" bezeichnet. Fig. 6 zeigt einen Längsschnitt durch den Drahthalter, wobei wiederum die Ebene E1 bezeichnet ist.

Das Verbindungselement 4 ist derart ausgebildet, dass es in einem Schnitt längs der Ebene E1 nicht kreisförmig ist. Insbesondere kann es so ausgebildet sein, dass es in diesem Schnitt eine Rechteckform, beispielsweise eine quadratische Form festlegt. Auf diese Weise ist ermöglicht, dass der Drahthalter mit nur einem Verbindungselement "verdrehsicher" an dem Bauteil 12 fixiert werden kann.

Fig. 7 zeigt einen Teilquerschnitt des Drahthalters; wie in dieser Schnittdarstellung beispielhaft bezeichnet, weist das Verbindungselement 4 zweckmäßig einen Steg 41 auf, der seinen Ursprung 43 an dem Anlageelement 2 nimmt. Fig. 8 zeigt eine Aufsicht auf den Drahthalter, wobei mit E2 eine weitere Ebene bezeichnet ist, die der Schnittebene der Fig. 7 entspricht. Die weitere Ebene E2 ist also senkrecht zu der Ebene E1 der Aufnahmeöffnung orientiert.

Der Steg 41 ist so geformt, dass er sich von seinem Ursprung 43 aus konvergent verjüngt. Der Steg 41 ist in einem weiteren Schnitt längs der weiteren Ebene E2 Y-förmig ausgebildet. Eine Y-Form ist besonders vorteilhaft, weil sie bei gegebener Stabilität besonders materialsparend ist.

Wie weiterhin aus Fig. 7 hervorgeht, weist das Verbindungselement 4 außerdem wenigstens einen Rastarm 45 auf, der an einem Endbereich 47 des Stegs 41 angeordnet ist, der dem Ursprung 43 gegenüberliegt; insbesondere kann der Rastarm 45 dort federnd angelenkt sein. Der Rastarm 45 ist dabei dafür vorgesehen, zur Fixierung des Drahthalters von einer weiteren, der zuerst genannten Seite gegenüberliegenden Seite rastend gegen einen weiteren Randbereich der Aufnahmeöffnung 20 zu greifen. Dies ist beispielhaft in Fig. 4 zu erkennen; dort greift der Rastarm 45 gegen einen Randbereich der Aufnahmeöffnung 10, der zur Innenseite der Leuchtenwanne weist.

Der Rastarm 45 weist weiterhin vorzugsweise eine, in Fig. 5 bezeichnete, Innenkante 451 auf, die dafür vorgesehen ist, gegen einen Randkantenbereich der Aufnahmeöffnung 10 in Anlage gebracht zu werden. Dies ermöglicht einen besonders sicheren Sitz des Drahthalters, wenn er an dem Bauteil 12 wie vorgesehen fixiert ist.

Besonders vorteilhaft ist außerdem ein weiterer Rastarm 45' vorgesehen, der spiegelsymmetrisch zu dem zuerst genannten Rastarm 45 ausgebildet ist.

Das Verbindungselement 4 ist mit dem Rastarm 45 bzw. mit den Rastarmen 45,45' vorzugsweise so ausgebildet, dass es sich zur Fixierung des Drahthalters an dem Bauteil 12 von der zuerst genannten Seite her in die Aufnahmeöffnung 10 einführen lässt, so dass der Rastarm 45 dabei durch Wechselwirkung mit dem Rand der Aufnahmeöffnung 10 zum Steg 41 hin gebogen wird und anschließend, sobald sich der Drahthalter in der vorgesehenen Relativposition zum Bauteil 12 befindet, aufgrund der Eigenelastizität des Verbindungselements 4 wieder ein Stück weit vom Steg 45 weg schwenkt, und zwar in die zur Fixierung vorgesehene Raststellung.

Wie beispielsweise aus den Figuren 5 und 6 hervorgeht, kann das Anlageelement 2 eine konkave Fläche aufweisen, wobei der Ursprung 43 des Stegs 41 in einem mittleren Bereich der konkaven Fläche 21 angeordnet ist. Insbesondere kann die konkave Fläche zur Ebene E1 der Aufnahmeöffnung 10 hin konkav ausgebildet sein.

Durch eine solche konkave Fläche 21 lässt sich erzielen, dass das Anlageelement 2 gegen den zuerst genannten Randbereich der Aufnahmeöffnung 10 gedrückt wird, wenn der Drahthalter an dem Bauteil 12 fixiert ist. Hierdurch ist ein besonders sicherer Sitz des Drahthalters an dem Bauteil 12 ermöglicht. Außerdem ermöglicht dies eine besonders gute Abdichtung der Aufnahmeöffnung 10 gegenüber Staub, sonstigen Partikeln oder dergleichen. Im gezeigten Ausführungsbeispiel lässt sich auf diese Weise der Innenbereich der Leuchtenwanne schützen, so dass die Leuchte insgesamt mit einer höheren Schutzklasse gestaltet werden kann. Dies wird auch dadurch erzielt bzw. weitergehend unterstützt, dass das Anlageelement 2 so geformt ist, dass es die Aufnahmeöffnung 10 ringförmig geschlossen und dabei gegenüber dem Randbereich abdichtend umgibt, wenn der Drahthalter wie vorgesehen an dem Bauteil 12 fixiert ist. Der Drahthalter kann aus Kunststoff bestehen; hierdurch weist er eine gewisse Eigenelastizität auf, wodurch die genannte Abdichtung besonders gut dichtend ausgebildet werden kann.

Vorzugsweise weist das Anlageelement 2 einen Durchmesser auf, der mindestens doppelt so groß, vorzugsweise mindestens dreimal so groß ist wie der Durchmesser des Verbindungselements 4. Hierdurch kann der Drahthalter besonders widerstandsfähig gegenüber einem Drehmoment gestaltet werden, das beispielsweise bei einem robotergestützten Einbringen des Drahts 20 entstehen kann. Auch lässt sich hierdurch eine besonders gute Kippsicherheit des Drahthalters erzielen.

Bei einer Leuchte, die einen erfindungsgemäßen Drahthalter aufweist, sowie ein entsprechendes Bauteil 12, an dem der Drahthalter wie vorgesehen fixiert ist, weist das

Bauteil 12 vorzugsweise eine entsprechende Aufnahmeöffnung 10 auf, die so geformt ist, dass ein Verdrehen des Verbindungselements 4 in der Aufnahmeöffnung 10 verhindert ist. Beispielsweise kann die Aufnahmeöffnung 10 die Form eines Rechtecks oder einer Ellipse aufweisen. Sie kann auch als Langloch ausgebildet sein. Die Form der Aufnahmeöffnung 10 kann insbesondere der oben genannten Rechteckform oder quadratischen Form entsprechen, die durch den Schnitt des Verbindungselements 4 längs der Ebene E1 durch die Aufnahmeöffnung 10 festgelegt wird bzw. entsprechend dem Zweck der Sicherung gegen ein Verdrehen an diese Form angepasst sein.

## Patentansprüche

1. Drahthalter zur Halterung von mindestens einem elektrischen Draht (20) einer Leuchte,
wobei der Drahthalter dafür vorgesehen ist, an einem eine Aufnahmeöffnung (10) aufweisenden Bauteil (12) der Leuchte fixiert zu werden,
wobei der Drahthalter Folgendes aufweist:
- ein Anlageelement (2), das dafür vorgesehen ist, von einer Seite an einen Randbereich der Aufnahmeöffnung (10) angelegt zu werden und
- ein Verbindungselement (4), das dafür vorgesehen ist, zur Fixierung des Drahthalters an dem Bauteil (12) rastend in die Aufnahmeöffnung (10) einzugreifen,
wobei das Verbindungselement (4) derart ausgebildet ist, dass es in einem Schnitt längs einer Ebene (E1), in der die Aufnahmeöffnung (10) liegt, wenn der Drahthalter wie vorgesehen an dem Bauteil (12) fixiert ist, nicht kreisförmig ist,
**dadurch gekennzeichnet,**
**dass** das Verbindungselement (4) einen Steg (41) mit einem Ursprung (43) an dem Anlageelement (2) aufweist, wobei sich der Steg (41) von dem Ursprung (43) ausgehend konvergent verjüngt,
wobei der Steg (41) derart ausgebildet ist, dass er in einem weiteren Schnitt längs einer weiteren Ebene (E2), die senkrecht zu der Ebene (E1) der Aufnahmeöffnung orientiert ist, Y-förmig ist.

2. Drahthalter nach Anspruch 1,
bei dem das Verbindungselement (4) derart ausgebildet ist, dass es in dem Schnitt eine Rechteckform, beispielsweise eine quadratische Form festlegt.

3. Drahthalter nach Anspruch 1 oder 2,
bei dem das Verbindungselement (4) wenigstens einen Rastarm (45) aufweist, der an einem dem Ursprung (43) gegenüber liegenden Endbereich (47) des Stegs (41) angeordnet ist und der dafür vorgesehen ist, zur Fixierung des Drahthalters von einer weiteren, der zuerst genannten Seite gegenüberliegenden Seite rastend gegen einen weiteren Randbereich der Aufnahmeöffnung (10) zu greifen.

4. Drahthalter nach einem der vorhergehenden Ansprüche,
bei dem das Anlageelement (2) eine konkave Fläche (21) aufweist und der Ursprung (43) des Stegs (41) in einem mittleren Bereich der konkaven Fläche (21) angeordnet ist.

5. Drahthalter nach einem der vorhergehenden Ansprüche,
bei dem das Anlageelement (2) einen Durchmesser aufweist, der mindestens doppelt so groß, vorzugsweise mindestens dreimal so groß ist wie der Durchmesser des Verbindungselements (4).

6. Drahthalter nach einem der vorhergehenden Ansprüche,
bei dem das Anlägeelement (2) so geformt ist, dass es die Aufnahmeöffnung (10) ringförmig geschlossen gegenüber dem zuerst genannten Randbereich abdichtend umgibt, wenn der Drahthalter wie vorgesehen an dem Bauteil (12) fixiert ist.

7. Drahthalter nach einem der vorhergehenden Ansprüche,
bestehend aus Kunststoff.

8. Leuchte, aufweisend
- einen Drahthalter nach einem der vorhergehenden Ansprüche und
- das die Aufnahmeöffnung (10) aufweisende Bauteil (12),
wobei der Drahthalter wie vorgesehen an dem Bauteil (12) fixiert ist.

9. Leuchte nach Anspruch 8,
bei der die Aufnahmeöffnung (10) eine Form aufweist, die ein Verdrehen des Verbindungselements (4) in der Aufnahmeöffnung (10) verhindert.

10. Leuchte nach Anspruch 9,
bei der die Aufnahmeöffnung (10) als Langloch oder Ellipse ausgeführt ist.

11. Leuchte nach einem der Ansprüche 8 bis 10,
bei der das Bauteil (12) ein Leuchtengehäuse, eine Leuchtenwanne oder eine Montageplatte ist.

## Claims

1. A wire holder for mounting at least one electrical wire (20) of a lamp, wherein, the wire holder is provided for the purpose of being fixed on a component (12) of the lamp having a receiving opening (10),
wherein the wire holder has the following:
- an abutment element (2), which is provided to be mounted from one side on an edge area of the receiving opening (10) and
- a connecting element (4), which is provided for engaging in the receiving opening (10) to fix the wire holder in a locking manner on the component (12), wherein the connecting element (4) is designed in such a way that it is not circular in a section along a plane (E1), in which the receiving opening (10) lies, if the wire holder is fixed as provided to the component (12),
**characterized in**
**that** the connecting element (4) has a web (41) with an origin (43) on the abutment element (2), wherein the web (41) tapers in a convergent manner starting from the origin (43),
wherein the web (41) is designed in such a way that it is Y-shaped in another section along a further plane (E2), which is oriented perpendicularly to the plane (E1) of the receiving opening.

2. A wire holder according to claim 1,
in which the connecting element (4) is designed in such a way that it defines a rectangular shape in the section, for example, a square shape.

3. A wire holder according to claim 1 or 2,
in which the connecting element (4) has at least one locking arm (45), which is arranged at an end area of (47) of the web (41) situated opposite the origin (43) and which is provided for the purpose of gripping a further edge area of the receiving opening (10) in order to fix the wire holder from another side opposite the side first mentioned in a locking manner.

4. A wire holder according to one of the preceding claims,
in which the abutment element (2) has a concave surface area (21) and the origin (43) of the web (41) is arranged in a center area of the concave surface area (21).

5. A wire holder according to one of the preceding claims,
in which the abutment element (2) has a diameter, which is at least twice as large, preferably is at least three times as large as the diameter of the connecting element (4).

6. A wire holder according to one of the preceding claims,
in which the abutment element (2) is formed so that it sealingly surrounds the receiving opening (10) circularly closed in respect to the edge area first mentioned, if the wire holder is fixed to the component (12) as provided.

7. A wire holder according to one of the preceding claims,
consisting of plastic.

8. A lamp, having
- a wire holder according to one of the preceding claims and
- the component (12) having the receiving opening (10),
wherein the wire holder is fixed to the component (12) as provided.

9. A lamp according to claim 8,
in which the receiving opening (10) has a shape, which prevents a twisting of the connecting element (4) in the receiving opening (10).

10. A lamp according to claim 9,
in which the receiving opening (10) is designed as an elongated hole or ellipse.

11. A lamp according to one of claims 8 to 10,
in which the component (12) is a lamp housing, a lamp cover or a mounting plate.

## Revendications

1. Support de fil pour au moins un fil électrique (20) d'un luminaire,
le support de fil étant prévu pour être fixé à un composant (12) du luminaire comprenant une ouverture de logement (10),
le support de fil comprenant les éléments suivants :
- un élément d'appui (2) conçu pour s'appuyer d'un côté contre un bord de l'ouverture de logement (10) et
- un élément de liaison (4) conçu pour s'emboîter avec un encliquetage dans l'ouverture de logement (10) afin de fixer le support de fil au composant (12), l'élément de liaison (4) étant conçu de façon à ce qu'il ne soit pas circulaire dans une coupe le long d'un plan (E1), dans lequel l'ouverture de logement (10) se trouve, lorsque le support de fil est fixé comme prévu au composant (12),
**caractérisé en ce que**
l'élément de liaison (4) comprend une nervure (41) avec une origine (43) sur l'élément d'appui (2), la nervure (41) se rétrécissant de manière convergente à partir de l'origine (43),
la nervure (41) étant conçue de façon à ce qu'elle ne soit pas en forme de Y, dans une autre coupe le long d'un autre plan (E2), qui est orientée perpendiculairement au plan (E1) de l'ouverture de logement.

2. Support de fil selon la revendication 1,
dans lequel l'élément de liaison (4) est conçu de façon à ce qu'il définisse, en coupe, une forme rectangulaire, par exemple une forme carrée.

3. Support de fil selon la revendication 1 ou 2,
dans lequel l'élément de liaison (4) comprend au moins un bras d'encliquetage (45) qui se trouve au niveau d'une extrémité (47) de la nervure (41), opposée à l'origine (43) et qui est conçu, pour la fixation du support de fil, avec un encliquetage d'un autre côté, opposé au côté déjà mentionné, de s'emboîter contre un autre bord de l'ouverture de logement (10).

4. Support de fil selon l'une des revendications précédentes,
dans lequel l'élément d'appui (2) présente une surface concave (21) et l'origine (43) de la nervure (41) se trouve dans une zone centrale de la surface concave (21).

5. Support de fil selon l'une des revendications précédentes,
dans lequel l'élément d'appui (2) présente un diamètre qui représente au moins le double, de préférence le triple, du diamètre de l'élément de liaison (4).

6. Support de fil selon l'une des revendications précédentes,
dans lequel l'élément d'appui (2) est formé de façon à ce qu'il entoure de manière étanche, fermée et annulaire, l'ouverture de logement (10) par rapport au bord déjà mentionné lorsque le support de fil est fixé comme prévu au composant (12).

7. Support de fil selon l'une des revendications précédentes,
constitué de matière plastique.

8. Luminaire comprenant :
- un support de fil selon l'une des revendications précédentes et
- le composant (12) comprenant l'ouverture de logement (10),
le support de fil étant fixé comme prévu au composant (12).

9. Luminaire selon la revendication 8,
dans lequel l'ouverture de logement (10) présente une forme qui empêche une rotation de l'élément de liaison (4) dans l'ouverture de logement (10).

10. Luminaire selon la revendication 9,
dans lequel l'ouverture de logement (10) est conçue comme un trou oblong ou une ellipse.

11. Luminaire selon l'une des revendications 8 à 10,
dans lequel le composant (12) est un boîtier de luminaire, une vasque de luminaire ou une plaque de montage.
